Europäisches Patentamt

European Patent Office

Office européen des brevets

(19)

(11) Veröffentlichungsnummer: **0 054 614**
**B1**

(12) **EUROPÄISCHE PATENTSCHRIFT**

(45) Veröffentlichungstag der Patentschrift:
31.10.84

(51) Int. Cl.³: **H 02 P 3/14, B 60 L 7/12**

(21) Anmeldenummer: 81106661.2

(22) Anmeldetag: 27.08.81

(54) Schaltungsanordnung zur Energierückgewinnung bei choppergesteuerten Reihenschlussmaschinen.

(30) Priorität: 24.12.80 DE 3048999

(43) Veröffentlichungstag der Anmeldung:
30.06.82 Patentblatt 82/26

(45) Bekanntmachung des Hinweises auf die Patenterteilung:
31.10.84 Patentblatt 84/44

(84) Benannte Vertragsstaaten:
DE FR GB IT SE

(56) Entgegenhaltungen:
EP - A - 0 013 383
FR - A - 2 399 155

Patent Abstracts of Japan Band 3, Nr. 5, 18. Januar 1979,
Seite 23E84
IEEE TRANSACTIONS ON INDUSTRY APPLICATIONS,
Band 1A - 8, Nr. 2, März/April 1972, New York B.
BERGMAN "Battery Powered Regenerative SCR Drive",
Seiten 190 bis 194

(73) Patentinhaber: ROBERT BOSCH GMBH, Postfach 50,
D-7000 Stuttgart 1 (DE)

(72) Erfinder: Schwarz, Albrecht, Ing. (grad.),
Hauptstrasse 17, D-7016 Gerlingen (DE)

**Beschreibung**

Die Erfindung geht aus von einer Schaltungsanordnung zur Energierückgewinnung bei choppergesteuerten Reihenschlußmaschinen nach der Gattung des Hauptanspruchs. Aus der Bosch-Druckschrift B9/2, Impulssteuerungen, 7. 80, Seite 17, ist es bekannt, bei Geräten mit Reihenschlußmotoren, insbesondere elektrisch betriebenen Fahrzeugen, eine Nutzbremsung durchzuführen. Bei der Einleitung der Bremsung wird die Feldwicklung des Reihenschlußmotors umgeschaltet und gleichzeitig ein Transistorschalter geöffnet, der über einen Widerstand einen Feldstrom durch die Feldwicklung aufrechterhält. Diese Anordnung hat den Nachteil, daß in den Widerständen zusätzlich Energie vernichtet wird. Durch den Widerstand verläuft der Stromimpuls durch die Erregerspule flach, so daß bis zur Einleitung des Rückspeisevorgangs eine große Zeitspanne vergeht.

Die EP-A1-13 383 zeigt und beschreibt eine Schaltungsanordnung für mit Gleichstrom gespeiste elektrische Antriebsmotoren. Die Schaltungsanordnung ist besonders dazu geeignet, möglichst schnell vom Fahrbetrieb auf Bremsbetrieb umzuschalten. Die gezeigte Schaltungsanordnung sieht keine Maßnahme vor, die beim Bremsbetrieb gewonnene Energie möglichst schnell in die Batterie zurückzuspeisen.

Die erfindungsgemäße Schaltungsanordnung mit den kennzeichnenden Merkmalen des Hauptanspruchs hat demgegenüber den Vorteil, daß mit einer geringen Anzahl von zusätzlichen Bauelementen eine Energierückgewinnung möglich ist. Dadurch vereinfacht sich die Steuer- und Regelungseinrichtung. Weiterhin kann unmittelbar und sehr schnell der Stromanstieg kontrolliert werden. Da der Stromkreis durch die Feldwicklung sehr niederohmig ist, erreicht man Stromimpulse sehr hoher Amplitude, die ein sicheres Ummagnetisieren der Maschine erlauben. Leistungsverluste an einem Widerstand entfallen. Durch die Anordnung der Felddiode wird eine zu starke Entregung der Maschine während des Rückspeisevorganges verhindert.

Durch die in den Unteransprüchen aufgeführten Maßnahmen sind vorteilhafte Weiterbildungen und Verbesserungen der im Hauptanspruch angegebenen Schaltungsanordnung möglich. Ist der Chopperschalter als Transistor ausgebildet, kann der ansonsten erforderliche Löschkreis entfallen. Bei der Energierückgewinnung erfolgt die Umpolung des Feldes nicht durch im Löschkondensator gespeicherte Energie, sondern wird durch ein längeres Öffnen des Choppertransistors erzielt. Weiterhin ist es günstig, eine Ankerdiode vorzusehen, die parallel zum Schalter angeordnet ist. Die Ankerdiode hat den Vorteil, daß sie nur in einer Richtung leitend ist, so daß der vom Generator erzeugte Strom in die Batterie abfließen kann, ohne daß geschaltet werden muß. Weiterhin ist es günstig, den Schalter als Thyristor auszubilden. Diese Maßnahme führt zu einem besonders einfachen Regelkreis, insbesondere in Verbindung mit einem Chopperthyristor und dem dazugehörigen Löschkreis. Nach der Umladung des Löschkondensators bricht der Strom durch den als Thyristor ausgebildeten Schalter zusammen, so daß der Thyristor von alleine erlischt und zusätzliche Steuer- und Regelvorrichtungen nicht erforderlich sind. In einer anderen Ausgestaltung ist es ebenfalls möglich, den Schalter als Transistor auszubilden. Dies ist insbesondere bei kleineren Leistungen günstiger. Da der Ausschaltzeitpunkt des Transistors in weiten Grenzen wählbar ist, führt dies nicht zu einer aufwendigeren Regelelektronik.

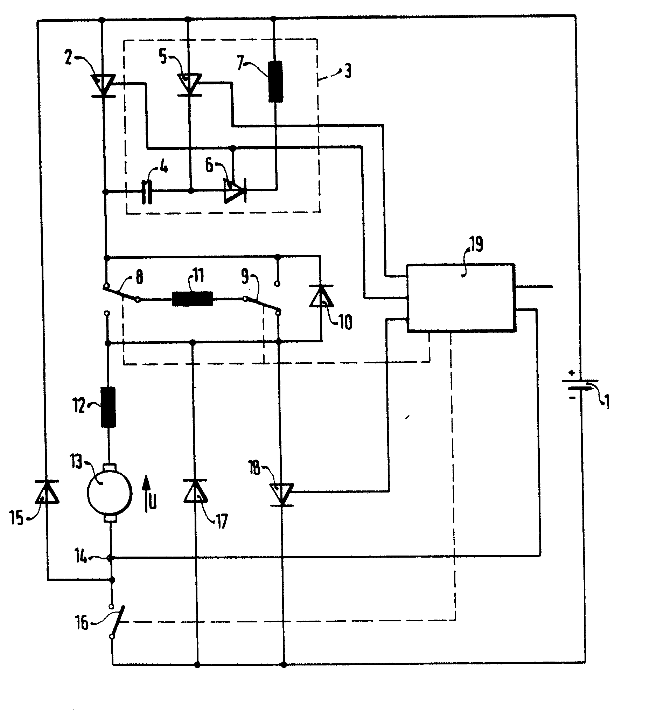

Ein Ausführungsbeispiel der Erfindung ist in der Zeichnung dargestellt und in der nachfolgenden Beschreibung näher erläutert. Die Figur zeigt das Ausführungsbeispiel.

Die Figur zeigt eine Batterie 1, von der eine Leitung zu einem Chopperthyristor 2 führt. An das andere Ende des Chopperthyristors ist ein Löschkreis 3 angeschlossen. Der Löschkreis 3 ist beispielhaft und zeigt eine von vielen Möglichkeiten. An die Zuleitung vom positiven Pol der Batterie 1 zum Thyristor 2 ist des weiteren ein Löschthyristor 5 und eine Umschwingspule 7 angeschlossen. Der andere Anschluß der Umschwingspule 7 steht mit einem weiteren Thyristor 6 in Verbindung, dessen weiterer Anschlußpunkt zu einem Löschkondensator 4 und zu dem anderen Anschluß des Löschthyristors 5 führt. Der Löschkondensator 4 ist seinerseits mit dem Chopperthyristor 2 verbunden. Vom Chopperthyristor 2 führt eine Leitung zu einem Kontakt des Umschalters 8. Der Mittelpunkt des Umschalters 8 führt zur Feldwicklung 11 eines Reihenschlußmotors 13. Die andere Seite der Feldwicklung 11 ist mit dem weiteren Mittelkontakt eines Umschalters 9 verbunden. Die Umschaltkontakte der Umschalter 8 und 9 sind paarweise miteinander verbunden. Die Umschaltkontakte sind mit einer Felddiode 10 überbrückt. Die Umschalter 8 und 9 können nur gemeinsam betätigt werden, wobei die Schalterstellungen so ausgebildet sind, daß bei einer Betätigung der Umschalter 8 und 9 der Strom durch die Feldwicklung 11 umgekehrt werden kann. An die andere Seite der Umschalter 8 und 9 ist eine Ankerwicklung 12 des Motors 13 angeschlossen. Der Ankerwicklung 12 folgt der Motor 13, der sowohl als Motor als auch als Generator arbeiten kann. Dem Motor 13 folgt eine Strommeßstelle 14. Nach der Strommeßstelle 14 ist eine Rückspeisediode 15 angeschlossen, die ihrerseits mit dem positiven Pol der Batterie 1 in Verbindung steht. Weiterhin folgt der Strommeßstelle 14 ein Bremsschalter 16, der andererseits an den negativen Pol der Batterie 1 angeschlossen ist. Parallel zur Ankerwicklung 12 des Motors 13, der Strommeßstelle 14 und dem Bremsschalter 16 ist eine Ankerdiode 17 und antiparallel dazu ein Thyristor 18 geschaltet. Über eine Regelschaltung 19 werden die Thyristoren und die Schalter gesteuert. Hierzu stehen die Steuerelektroden der Thyristoren 2 und 6 mit der Regelschaltung 19 in Verbindung, während getrennt davon die Thyristoren 5 und 18 angesteuert werden. Die Regelschaltung wirkt auch auf die Umschalter 8 und 9 und den Bremsschalter 16 ein. Seinen Istwert erhält die Regelschaltung 19 von der Strommeßstelle 14, während der Sollwert durch nicht dargestellte Bedienungselemente des Fahrers, beispielsweise eines elektrischen Fahrzeuges vorgegeben wird. Solche Regel- und Steuerelektroniken sind beispielsweise in der zuvor erwähnten Literaturstelle beschrieben.

Die Wirkungsweise der Schaltungsanordnung sei anhand eines Elektrofahrzeuges beschrieben. Beim Fahrbetrieb wird der Strom durch den Motor 13 geschoppert. Mittels eines Fahrpedals wird der Sollwert des Stromes einer Regelschaltung 19 vorgegeben und an der Strommeßstelle 14 gemessen. Da der Motor 13 getaktet wird, läßt sich der Strom durch das Impuls-Pausen-Verhältnis leicht verändern. Die Regeleinrichtung 19 veranlaßt, daß die Thyristoren 2 und 6 gezündet werden, was einerseits den Fahrmotor mit Strom versorgt und andererseits zur Aufladung des Löschkondensators 4 führt. Ist der Löschkondensator 4 umgeladen, erlischt der Thyristor 6 zwangsläufig. Der Thyristor 2 wird durch Zünden des Thyristors 5 gesperrt, da durch den Umladevorgang im Löschkondensator 4 der Thyristor 2 stromlos wird und erlischt.

Soll nun das Fahrzeug gebremst werden, wird durch die Regelschaltung 19 zuerst der Schalter 16 geöffnet. Weiterhin muß das Magnetfeld in der Maschine durch einen maschinenabhängigen Strom durch die Feldwicklung 11 in die umgekehrte Richtung gebracht werden. Aus diesem Grunde werden durch die Regelschaltung 19 die beiden Umschalter 8 und 9 betätigt, die bewirken, daß der Stromfluß durch Feldwicklung 11 umgekehrt wird. Gleichzeitig werden der Thyristor 18 und der Löschthyristor 5 gezündet. Durch die Freigabe der im Löschkondensator 4 gespeicherten Energie erlischt einerseits der Chopperthyristor 2, andererseits reicht die Energie im Löschkondensator 4 aus, um in der Feldwicklung 11 über den Thyristor 18 einen Stromfluß zu erzeugen, der die notwendige Vorerregung für die Maschine 13 verursacht. Nachdem der Strom im Kondensator 4 Null geworden ist, d. h. die Spannung am Kondensator 4 gleich der Batteriespannung geworden ist, erlischt Thyristor 18 selbsttätig, die Felddiode 10 wird leitend, und das Feld 11 beginnt freizulaufen. Nach einer von der Regeleinrichtung 19 aus dem vorgegebenen Sollwert ermittelten Zeit wird der Thyristor 2 wieder gezündet. Ist jetzt die Spannung U am Anker bereits größer als die Summe der Flußspannungen von Thyristor 2 und Diode 15, beginnt der Strom in der Ankerwicklung 13 und der Feldwicklung 11 lawinenartig anzusteigen, wobei dann der Rückspeisevorgang eingeleitet ist. Andernfalls vergrößert die Regeleinrichtung in den nächsten Taktperioden das Tastverhältnis so lange, bis der dem Sollwert entsprechende Ankerstrom erreicht ist. Bei jedem Ausschalten des Hauptthyristors 2, d. h. beim Zünden der Thyristoren 5 und 18 wird dem Feld 11 die Energie zur Erregung der Maschine aus der Batterie zugeführt. Die erforderliche Wartezeit bis zum Rückspeiseeinsatz wird dadurch allein von der Maschine und deren Daten bestimmt. Die Felddiode 10 dient als Freilaufdiode, welche den Feldstrom führt, während die Thyristoren 2, 5 und 18 nichtleitend sind. Durch das Drehen des Motors 13 und die umgekehrte Erregung der Feldwicklung 11 wird im Motor 13 eine Spannung induziert, die einerseits über die Diode 15 an den positiven Pol der Batterie 1, andererseits über die Diode 17 an den negativen Pol der Batterie gelangt. Durch den dabei fließenden Strom wird die Batterie wieder aufgeladen. Um die Erregung in der Feldwicklung 11 aufrechtzuerhalten, erfolgt die Rückspeisung ebenfalls im Taktbetrieb mit Hilfe des Chopperthyristors 2. Die Reihenschaltung mit dem Chopperthyristor 2, der Feldwicklung 11, der Ankerwicklung 12, dem Motor 13, der Strommeßstelle 14 und der Rückspeisediode 15 wird periodisch durch den Thyristor 2 kurzgeschlossen. Die am Motor 13 abfallende Spannung U treibt dabei einen Strom im gesamten Stromkreis, welcher durch die direkte Kopplung von Anker und Feld lawinenartig ansteigt. Ist der Strom auf einen durch die Regeleinrichtung 19 festgelegten Wert gestiegen, wird der Chopperthyristor 2 wie zuvor beschrieben gelöscht. Die in der Ankerwicklung gespeicherte Energie wird über die Dioden 15 und 17 in die Batterie entladen, während die Erregung in der Feldwicklung 11 durch den durch die Diode 10 geschlossenen Stromkreis aufrechterhalten wird.

Da das Feld sehr niederohmig ist, werden durch diese Schaltungsanordnung Stromimpulse sehr hoher Amplitude erreicht, die ein sicheres Ummagnetisieren der Maschine erlauben. Die Schaltungsanordnung weist ein schnelles Regelverhalten auf, da das Taktverhältnis durch die Regelschaltung 19 nur soweit vergrößert wird, wie es für den Anlauf des Rückspeisevorgangs erforderlich ist. Der lawinenartige Stromanstieg kann ständig durch die Strommeßstelle 14 überwacht werden. Der Thyristor 18 erlischt nach dem Ablauf des Entladevorganges selbständig. Zusätzliche Schutzwiderstände sind nicht erforderlich, da während des Rückspeisevorganges der bei Reihenschlußmaschinen systembedingte Lawineneffekt nicht auftreten kann, da die Feldwicklung 11 eine eigene Freilaufdiode 10 hat und der Strom in der Feldwicklung 11 aufgrund der Entladung des Magnetfeldes in der Feldwicklung nicht zunehmen, sondern nur abnehmen kann. Die besondere Anordnung der Felddiode 10 bewirkt, daß eine zu starke Entregung der Maschine während des Rückspeisevorgangs entfällt, da die Feldwicklung 11 durch die Felddiode 10 nahezu exakt kurzgeschlossen ist.

Das Ende des Rückspeisevorganges kann beispielsweise aus dem Tastverhältnis des Steuertaktes für den Chopperthyristor 2 einfach abgeleitet werden. Das Fahrzeug wird, nachdem keine Energie mehr zurückgewonnen werden kann, im Gegenstrombremsprinzip bei geschlossenem Schalter 16 vollständig zum Stillstand gebracht.

Das gezeigte Ausführungsbeispiel läßt sich bei Bedarf verschieden variieren. Statt des dargestellten Löschkreises 3 sind beliebige andere bereits bekannte Löschkreise verwendbar. Der Löschkreis 3 kann entfallen, wenn statt des Chopperthyristors 2 ein Transistor Verwendung findet, der insbesondere bei Kleinleistungsmaschinen besonders geeignet ist. Da nun die Erregungsenergie nicht dem Löschkondensator 4 zu entnehmen ist, ist es notwendig, daß bei der Verwendung eines Choppertransistors, der Transistor auch dann noch geöffnet ist, wenn der Thyristor 18 gezündet wird. Die Öffnungsdauer ist dabei solange zu wählen, bis die Erregung der Feldwicklung 11 geändert ist. Der Transistor ist daher kurz nach dem Zünden des Thyristors 18 zu schließen. Die Zeitdauer ist abhängig von dem verwendeten Motor bzw. dessen Feldwicklung. Die weiteren Vorgänge laufen wie zuvor beschrieben ab. Auch der Thyristor 18 kann durch einen Transistor ersetzt werden. Der Transistor ist dann ebenso wie der Thyristor 18 einzuschalten. Da der Strom durch den Thyristor 2 bzw. den äquivalenten Transistor unterbrochen wird, ist es nicht notwendig, den für den Thyristor 18 eingesetzten Transistor zu einem vorgegebenen Zeitpunkt auszuschalten. Hierfür können andere bereits in der Regelschaltung 19 vorhandene geeignete Impulse Verwendung finden. Für den Rückspeisestrom ist der Transistor durch die Diode 17 kurzgeschlossen.

**Patentansprüche**

1. Schaltungsanordnung zur Energierückgewinnung bei choppergesteuerten Reihenschlußmaschinen im Bremsbetrieb mit einer Regeleinrichtung zur Steuerung der Reihenschlußmaschine, mit einer Serienschaltung bestehend aus einem als Thyristor (2) mit zugehörigem Löschkreis (3) ausgebildeten Chopperschalter (2, 3), einer beim Übergang vom Fahrbetrieb zum Bremsbetrieb über einen Umschalter (8, 9) umschaltbaren Feldwicklung (11), der Ankerwicklung (12) der Reihenschlußmaschine (13) und einem im Bremsbetrieb offenen Schalter (16) zwischen den Speisespannungsklemmen, und mit einer Felddiode (10) sowie die Ankerwicklung (12) der Reihenschlußmaschine mit den Speisespannungsklemmen verbindenden Rückspeisedioden (15, 17), wobei die Felddiode (10) über die Umschaltkontakte (8, 9) parallel zur Feldwicklung (11) geschaltet ist und wobei ein weiterer Schalter (18) zwischen Feldwicklung (11) und Ankerwicklung (12) angeschlossen ist, der direkt zur Spannungsquelle (1) führt und unmittelbar nach Öffnen des im Bremsbetrieb offenen Schalters (16) kurzzeitig bis zum Ummagnetisieren der Feldwicklung (11) geschlossen wird.

2. Schaltungsanordnung nach Anspruch 1, wobei der Chopperschalter als Transistor ausgebildet ist.

3. Schaltungsanordnung nach Anspruch 1 oder 2, wobei der weitere Schalter (18) als Thyristor ausgebildet ist.

4. Schaltungsanordnung nach Anspruch 1 oder 2, wobei der weitere Schalter (18) als Transistor ausgebildet ist.

**Claims**

1. Circuit for energy recuperation in chopper-controlled series-wound dynamos during braking, with a control device for controlling the series-wound dynamo, with a series connection consisting of a chopper switch (2, 3) designed as a thyristor (2) with an associated turn-off circuit (3), a field winding (11) which can be changed over via a change-over device (8, 9) during the transition from driving to braking, the armature winding (12) of the series-wound dynamo (13), and a switch (16), open during braking, between the supply-voltage terminals, and with a field diode (10) and feedback diodes (15, 17) which connect the armature winding (12) of the series-wound dynamo to the supply-voltage terminals, the field diode (10) being connected in parallel to the field winding (11) via the changeover contacts (8, 9), and a further switch (18) being connected between the field winding (11) and the armature winding (12), leading directly to the voltage source (1) and, immediately after the opening of the switch (16) open during braking, being closed briefly until the magnetism of the field winding (11) is reversed.

2. Circuit according to claim 1, the chopper switch being designed as a transistor.

3. Circuit according to claim 1 or 2, the further switch (18) being designed as a thyristor.

4. Circuit according to claim 1 or 2, the further switch (18) being designed as a transistor.

**Revendications**

1. Dispositif de circuit pour la récupération d'énergie en fonctionnement de freinage dans le cas de moteurs-série commandés par des hacheurs, avec un dispositif de réglage pour commander le moteur-série, avec un branchement en série constitué d'un commutateur-hacheur (2, 3) revêtant la forme d'un thyristor (2) avec son circuit d'extinction associé (3), d'un enroulement d'excitation (11) susceptible d'être commuté par l'intermédiaire d'un inverseur (8, 9) lors du passage du fonctionnement de propulsion au fonctionnement de freinage, de l'enroulement d'induit (12) du moteur-série (13), et d'un commutateur (16), ouvert en fonctionnement de freinage, entre les bornes de tension d'alimentation, et avec une diode d'excitation (10) ainsi qu'avec le circuit d'induit (12) du moteur-série, avec des diodes de réalimentation (15, 17) reliant les bornes de tension d'alimentation, dispositif dans lequel la diode d'excitation (10) est branchée en parallèle sur l'enroulement d'excitation (11) par l'intermédiaire des contacts d'inversion (8, 9), et dans lequel un autre commutateur (18) est raccordé entre l'enroulement d'excitation (11) et l'enroulement d'induit (12), ce commutateur aboutissant directement à la source de tension (1) et étant fermé pedant un court instant, jusqu'à la démagnétisation de l'enroulement d'excitation (11), directement après l'ouverture du commutateur (16) ouvert en fonctionnement de freinage.

2. Dispositif de circuit selon la revendication 1, dans lequel le commutateur-hacheur est un transistor.

3. Dispositif de circuit selon la revendication 1 ou 2, dans lequel l'autre commutateur (18) est un thyristor.

4. Dispositif de circuit selon la revendication 1 ou 2, dans lequel l'autre commutateur (18) est un transistor.